(19) **Europäisches Patentamt**

**European Patent Office**

**Office européen des brevets**

(11) **EP 1 018 457 B1**

(12) **EUROPEAN PATENT SPECIFICATION**

(45) Date of publication and mention
of the grant of the patent:
**08.08.2001 Bulletin 2001/32**

(51) Int Cl.⁷: $B60R\ 25/10$, $H04B\ 7/26$

(21) Application number: **98936663.8**

(86) International application number:
**PCT/JP98/03482**

(22) Date of filing: **05.08.1998**

(87) International publication number:
**WO 99/08909 (25.02.1999 Gazette 1999/08)**

(54) **POSITIONING SYSTEM AND MOBILE COMMUNICATION DEVICE**

ORTUNGSSYSTEM UND MOBILKOMMUNIKATIONSVORRICHTUNG

SYSTEME DE POSITIONNEMENT ET DISPOSITIF DE COMMUNICATION MOBILE

(84) Designated Contracting States:
**DE FI FR GB IT SE**

(30) Priority: **20.08.1997 JP 22350297**

(43) Date of publication of application:
**12.07.2000 Bulletin 2000/28**

(73) Proprietor: **Locus Corporation
Osaka-shi, Osaka 542-0081 (JP)**

(72) Inventors:
• **KOSHIMA, Hiroaki, Locus Corporation
Chuo-ku, Osaka-shi, Osaka 542-0081 (JP)**
• **KUMAMOTO, Katsuhiko, Locus Corporation
Chuo-ku, Osaka-shi, Osaka 542-0081 (JP)**

(74) Representative: **Prüfer, Lutz H., Dipl.-Phys. et al
PRÜFER & PARTNER,
Patentanwälte,
Harthauser Strasse 25d
81545 München (DE)**

(56) References cited:
| | |
|---|---|
| **EP-A- 0 251 457** | **WO-A-95/22131** |
| **DE-A- 19 529 742** | **JP-A- 3 112 751** |
| **JP-A- 5 164 832** | **JP-A- 6 028 590** |
| **JP-A- 7 329 721** | **JP-A- 8 136 639** |
| **JP-A- 8 149 568** | **JP-A- 8 304 525** |
| **JP-U- 2 029 860** | **US-A- 5 055 851** |

**Description**

Specification

Field of Invention

The present invention relates to a location system and a mobile communication device according the preambles of the independent claims 1 and 2. More particularly, the present invention relates to a location system employing a zone communication system with a plurality of radio zones, and a mobile communication device for communicating while moving its position on the basis of a repeater provided in each of the plurality of radio zones.

Background Art

A location system and a mobile communication de device according to the preambles of claims 1 and 2 are known from WO 95/22 131.

A small zone radio communication system such as the PHS (Personal Handyphone System; portable telephone) is known as an example of a zone communication system constituted by a plurality of radio zones.

The PHS portable terminal representative of a mobile communication device is used as a cordless telephone at home. It can be carried outside to be connected to public and digital networks via indoor or outdoor public repeaters and the like. In other words, it can be used virtually as a handy portable telephone. The PHS greatly differs from the existing cellular type portable telephone (here, the existing portable telephone system is generically referred to as the cellular system) in that the PHS employs the small zone system.

A cellular system portable telephone has a repeater installed for every site of a radius of 2-3 km in cities where the output of a mobile station is at least 600 milliwats. The output of a repeater is 25-45 watts. In the suburbs, the range of approximately 10 km may be covered.

In contrast, the output of the PHS mobile station is as weak as approximately 10 milliwats. The output of a repeater is merely 20 milliwats in the metropolitan areas, and 100 milliwats in the suburbs. Therefore, the communication enable distance between a repeater and a mobile station is approximately 100 m in the city and approximately 500 m in the suburbs.

Research is in progress to apply the PHS to a location tracking system taking advantage of the feature that the radio zone of the PHS is small. A system of identifying the position of a mobile station is proposed by having the mobile station receive the waves of a plurality of repeaters in the neighborhood to transmit a plurality of pairs of position information with an identification code unique to a repeater and a transmitted electric field value as a data pair to the location monitor station via a repeater. The location monitor station can identify the position of the mobile station by referring to the received position information and a relevant data base.

Flagrant cases of theft directed to vehicles and the like often occur nowadays to become a disturbing social problem. It has become difficult to prevent the act of stealing a vehicle and the like since the robbery group is cleverly organized and use dexterous techniques. A stolen car can be transferred far away in an extremely short time since the car itself can function as a transportation means. Once a vehicle is stolen, retrieval thereof will become extremely difficult.

The same can be said for other items such as baggage and other belongings as well as cars and the like. It was difficult to locate an item once it is stolen.

As a further application of a conventional position detection system, an approach is considered to conceal a mobile communication device into a vehicle, baggage, and other belongings to locate that vehicle, luggage, and the like when stolen. A signal can be transmitted to the mobile communication device according to the report from the owner of the stolen item to receive position information from the mobile communication device to track the location of the stolen item to which the mobile communication device is attached.

According to this method, tracking of a stolen vehicle and the like can be initiated only from the time point when the owner of the vehicle becomes aware of the theft. There is a problem that the stolen vehicle is already transported abroad or the belonging being already used when the owner finds out the theft. There was a problem that the damage caused by theft cannot be substantially prevented.

In view of the foregoing, the object of the present invention is to provide a location system and a mobile communication device that can detect occurrence of theft of a vehicle and other belongings at an early stage, and that can locate the stolen item speedily.

Disclosure of the Invention

A location system according to claim 1 employs a zone communication system constituted by a plurality of radio zones.

The location system includes a repeater provided at each of said plurality of radio zones, a mobile communication device for communicating while moving on the basis of a relevant repeater, a communication station for communicating with the mobile communication device, and a motion sensor for sensing movement of a mobile that moves together with the mobile communication device.

The mobile communication device includes a measurement device that can measure electric field intensity of a wave arriving from a plurality of the repeaters, and a transmitter for transmitting to the communication station predetermined position identification information according to a measurement result of the measurement device on the condition that movement of the mobile is sensed by the motion sensor when a predetermined movement inhibit condition is established.

The communication station includes a notification device for notifying that the mobile is moving even though the movement inhibit condition is established according to the received position identification information, and a location device for identifying the advancing position of the mobile moving together with the mobile communication device according to the received position identification information.

The motion sensor senses movement of a mobile that moves together with the mobile communication device by a change in the order of repeaters arranged in an order according to the electric field intensity measured by the measurement device after the movement inhibit condition is established.

The movement of the mobile can be sensed taking advantage of the measurement device required to generate the position identification information. Therefore, at least a portion of the motion sensor can be shared by the measurement device to reduce the system cost.

According to the invention defined in claim 1, predetermined position identification information according to a measured result by the measurement device is transmitted to the communication station on the condition that movement of the mobile is sensed by the motion sensor when a predetermined movement inhibit condition is established. Therefore, a location system can be provided that detects theft of a vehicle and other belongings at an early stage, and that can find the stolen item as soon as possible.

The invention according to claim 2 is a mobile communication device for communication while proceeding on the basis of a repeater provided in each of a plurality of radio zones.

The mobile communication device includes a motion sensor for sensing movement of a mobile that moves together with the mobile communication device, a measurement device that can measure electric field intensity of a wave arriving from a plurality of repeaters, and a transmitter for transmitting position identification information that is based on the measured result of the measurement device and that allows identification of the advancing position of the mobile that moves together with the mobile communication device to a communication station that communicates with the mobile communication device under the condition that movement of the mobile is sensed by the motion sensor when a predetermined movement inhibit condition is established.

According to the invention defined in claim 2, predetermined position identification information according to the measured result of the measurement device is transmitted to the communication station under the condition that movement of the mobile is sensed by the motion sensor when a predetermined movement inhibit condition is established. Therefore, the advancing position of a mobile such as the person who stole the mobile communication device or a stolen vehicle can be identified.

Brief Description of the Drawings

Fig. 1 shows an entire structure of a position display system of a mobile terminal.

Fig. 2 shows an example of a structure of a transmitter identification code and a receiver identification code transmitted between a repeater and a mobile terminal in a public system.

Fig. 3 shows an example of a structure of a transmitter identification code and a receiver identification code transmitted between a repeater and a mobile terminal in a self-management system.

Fig. 4 is a block diagram showing a circuit structure of a mobile communication device.

Fig. 5 is a block diagram showing a structure of a center station.

Fig. 6 is a block diagram showing a structure of a center station.

Fig. 7 is a diagram representing the principle of a method of identifying the position of a mobile station.

Fig. 8 shows an example of a control circuit of the center station.

Fig. 9 is a flow chart showing the procedure of a theft information transmission process.

Fig. 10 is a flow chart showing the procedure of a transmission mode modify process.

Fig. 11 is a flow chart showing the procedure of a process executed by the center station.

Fig. 12 is a block diagram showing a circuit structure of a mobile communication device.

Fig. 13 is a flow chart showing the procedure of a theft information transmission process.
Fig. 14 is a flow chart showing the procedure of a process executed by the center station.

Best Mode for Carrying Out the Invention

First Embodiment

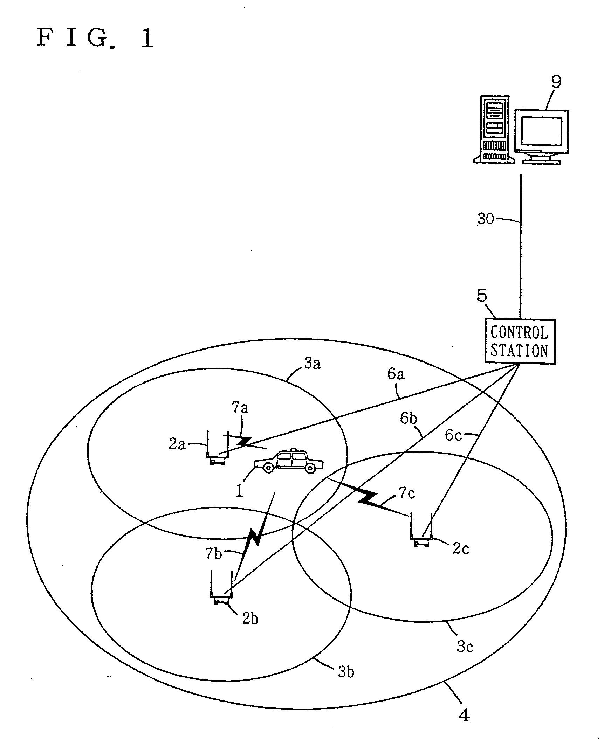

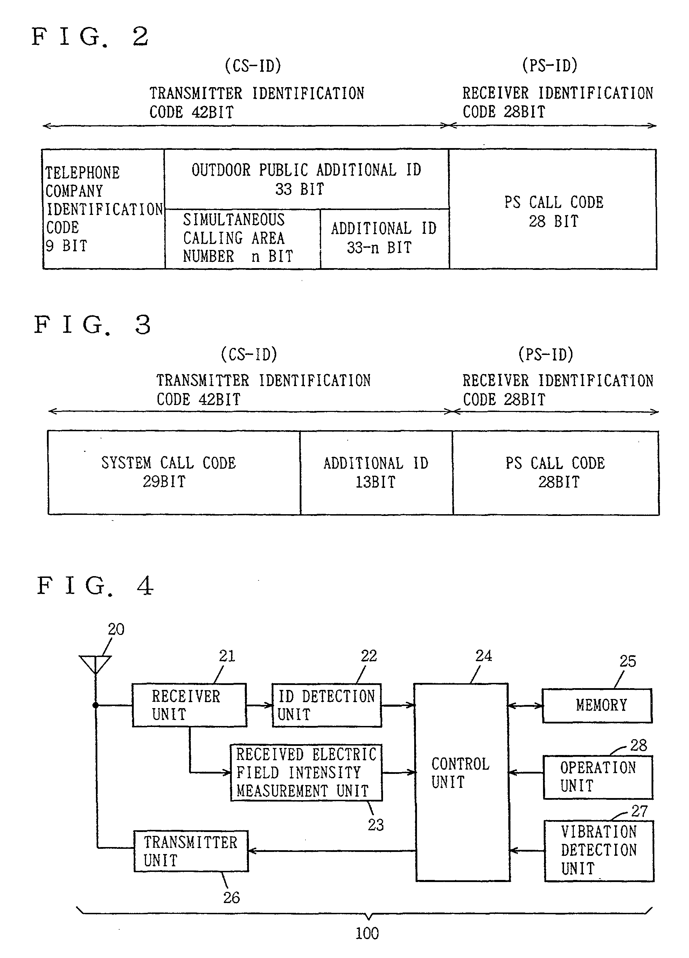

Embodiments of the present invention will be described hereinafter with reference to the drawings. Fig. 1 is an entire structure diagram of a location system of a stolen vehicle taking advantage of the PHS according to a first embodiment of the present invention. Referring to Fig. 1, 1 designates a mobile terminal in which a mobile communication device 100 (refer to Fig. 2) is incorporated, 2a, 2b, 2c, ... designate repeaters that effect conversation with mobile terminal 1 and registration of a calling area, 3a, 3b, 3c, ... designate radio zones (microcells) of each of repeaters 2a, 2b, 2c, ..., 4 designates the simultaneous calling area formed of a plurality of radio zones 3a, 3b, 3c, ..., 5 designates a control station for providing control of line connection with a mobile terminal 1 within the simultaneous calling area 4, and 9 designates the center station effecting communication with mobile terminal 1.

Each of repeaters 2a, 2b, 2c, ... is connected to control station 5 through electrical communication line facilities 6a, 6b, 6c, ... , respectively. Center station 9 is connected to control station 5 through a line 30. Repeaters 2a, 2b, and 2c periodically send out a signal including the simultaneous calling area number of control station 5 to allow calling and connection between mobile terminal 1 and control station 5. The same simultaneous calling area number is sent out from repeaters 2a, 2b, and 2c under control of control station 5. Also, a repeater identification code unique to each repeater is emitted.

The simultaneous calling area number and repeater identification code will be described with reference to Figs. 2 and 3. Figs. 2 and 3 show an example of a portion of a communication slot transmitted from repeaters (CS) 2a, 2b, 2c, ... to mobile terminal (PS) 1. Particularly, Fig. 2 corresponds to a public system, and Fig. 3 corresponds to a self-management system.

In the public system of Fig. 2, the transmitter identification code (CS-ID) is formed of 42 bits, including the company identification code of 9 bits which is the code of discriminating the telephone company, and an outdoor public additional ID code of 33 bits for identifying the outdoor public repeater. The outdoor public additional ID code includes a simultaneous calling area number and an additional ID number to emit simultaneous calls to a plurality of repeaters within a particular area for calling a particular terminal. A repeater identification code that allows identification of a certain repeater is constituted by this outdoor public additional ID code. The receiver identification code (PS-ID) identifying a mobile station (mobile terminal) is formed of 28 bits. Communication on the basis of a repeater is carried out by transmitting to the repeater a communication slot including a similar receiver identification code and a transmitter identification code from mobile terminal 1 receiving the control information.

Referring to the self-management system of Fig. 3, the transmitter identification code for identifying a repeater is formed of 42 bits, including the system call code of 29 bits indicating the call code of the self-management system and an additional ID of 13 bits representing the repeater ID code of the self-management system. The repeater identification code that allows identification of a repeater is constituted by this transmitter identification code. The receiver identification code for identifying a mobile station (mobile terminal) is formed of 28 bits.

Referring to Fig. 1 again, a different simultaneous calling area number is issued from control station 5 in an adjacent simultaneous calling area (not shown). Mobile terminal 1 detects change in this simultaneous calling area number to register a repeater which becomes the communication base of control station 5.

More specifically, mobile communication device 100 installed in mobile terminal 1 establishes synchronization under a "control channel select" state in response to the power being turn on. Then, the repeater receiving the simultaneous calling area number at the maximum electric field intensity is registered at control station 5. Mobile communication device 100 establishes wireless section hand shaking with that repeater. Thus, a link channel is established. When there is a calling operation from mobile terminal 1 or center station 9 in a state where the link channel is established, a service channel is established to connect the call. Thus, communication is allowed.

During establishment of the link channel, the electric field intensity of the repeater with which the link channel established is monitored. If the intensity is lower than a predetermined threshold electric field intensity, hand shaking with the repeater having the strongest electric field intensity at that time point is reestablished. This is called "hand over".

Here, mobile terminal 1 is a vehicle in which mobile communication device 100 is incorporated to prevent theft. The owner of mobile terminal 1 sets mobile terminal 1 to the theft protection mode before leaving mobile terminal 1. Internal mobile communication device 100 has the function to sense movement of the vehicle. The electric field intensity of the wave arriving from a plurality of repeaters 2a, 2b, 2c, ... in the neighborhood is continuously measured upon movement of the vehicle when the theft protection mode is set. A call is automatically issued to center station 9 to transmit the theft information including the measured result continuously thereto.

Center station 9 is, for example, an organization that monitors the location system of the stolen vehicle. Center

## EP 1 018 457 B1

station 9 includes a data base in which are stored the position identification information of each of repeaters 2a, 2b, 2c, ..., information that allows identification of the distance between a repeater and mobile terminal 1 according to electric field intensity, map information and the like, a display device for displaying the position of mobile terminal 1 on a screen according to calculation using the data base, and a notification means for notifying occurrence of theft. The transmission of the theft information from mobile terminal 1 allows immediate recognition of occurrence of theft. The advancing position of mobile terminal 1 can be tracked on the screen of the display device.

In cities and towns, the area covered by the repeater is small according to the characteristic of the PHS system. When mobile terminal 1 travels at high speed, hand over occurs frequently. There is a possibility that the radio line control function between the repeaters cannot follow the trace. In this case, it may become difficult to obtain the position information of mobile terminal 1 that is moving at high speed in real time. This problem can be solved by effecting communication when mobile terminal 1 stops or slows down at a crossing point or a relevant site. By measuring the electric field intensity of each of repeaters 2a, 2b, 2c, ... at such a timing, the measurement error caused by fading can be extremely reduced than the case of measuring the intensity during travel of mobile terminal 1. In the suburbs, the area covered by each base station is generally great, so that there is no problem in collecting the position information.

Fig. 4 is a block diagram showing the circuit structure of mobile communication device 100 incorporated in mobile terminal 1. Referring to Fig. 4, mobile communication device 100 includes an antenna 20 for transmission and reception, a receiver unit 21 for amplifying and demodulating the signal received at antenna 20, an ID detection unit 22 for detecting an identification code (ID) to identify a repeater 6 according to the signal demodulated at receiver unit 21, a received electric field intensity measurement unit 23 for measuring the electric field intensity according to the signal amplified at receiver unit 21, a transmitter unit 26 for generating, modulating, and amplifying information to transmit through antenna 20, an operation unit 28 for setting the theft mode and the like, a vibration detection unit 27 for detecting vibration of the vehicle, a memory 25, and a control circuit 24 providing the entire control of mobile communication device 100.

When operation unit 28 is manipulated to set the theft mode, this setting is detected at control unit 24. The setting and cancel of the theft mode can be effected through input of a secret number, if necessary. By allowing cancel of the theft mode only through input of an appropriate secret number, the event of the perpetrator becoming aware of this system during escape to disable the theft mode can be prevented. Furthermore, in order to prevent the user from forgetting to set the theft mode, a structure can be provided in which automatic setting is effected in response to the vehicle being locked.

Vibration detection unit 27 detects vibration occurring in accordance with movement of the vehicle. This vibration detection unit 27 can have a structure that detects vibration of the vehicle itself or that detects vibration of mobile communication device 100 in response to vibration of the vehicle. Alternatively, the vibration of the vehicle when the engine of the vehicle is started can be sensed. Vibration detection unit 27 does not have to be provided in mobile communication device 100 itself. Vibration detection unit 27 can be attached integrally to the vehicle to output a sense signal to an input unit provided to receive the sense signal from vibration detection unit 27.

Upon sensing vibration of the vehicle by vibration detection unit 27, a sense signal is applied to control unit 24. Control unit 24 generates position information including the pair of the electric field intensity of each repeater measured by received electric field intensity measurement unit 23 and the identification code of each repeater detected by ID detection unit 22 under the condition that the theft protection mode is set when a sense signal is received. Then, a call is issued to center station 9 to send the theft information including the position information. The electric field intensity of each repeater is repeatedly measured by received electric field intensity measurement unit 23 until the theft protection mode is canceled. The theft information is sequentially transmitted at a predetermined timing. Center station 9 traces the stolen vehicle (mobile station 1) on the basis of the theft information that is repeatedly transmitted. The transmission timing of the theft information can be set through operation unit 28, or by remote control from center station 9. The details of this transmission timing will be described afterwards.

Since mobile communication device 100 is a unit dedicated to the theft protection system, the voice circuit and display circuit provided in a general PHS are removed. This is because the general conversation function is not necessary. In other words, identification of the repeater that establishes a link channel with mobile terminal 1 is effected using mainly the PHS control channel. Therefore, various push buttons, liquid crystal display, speaker, microphone, and electronic circuit components associated thereto can be omitted appropriately. This provides the advantage that mobile communication device 100 can be reduced in cost, size, and weight. It is needless to say that the conversation function can be added, if necessary, to allow conversation inside the vehicle. Also, by providing an input unit that receives a sense signal from vibration detection unit 27 in the commonly used portable PHS and mounting the same at a predetermined site of the vehicle, as necessary, the function of the above-described mobile communication device 100 can be implemented.

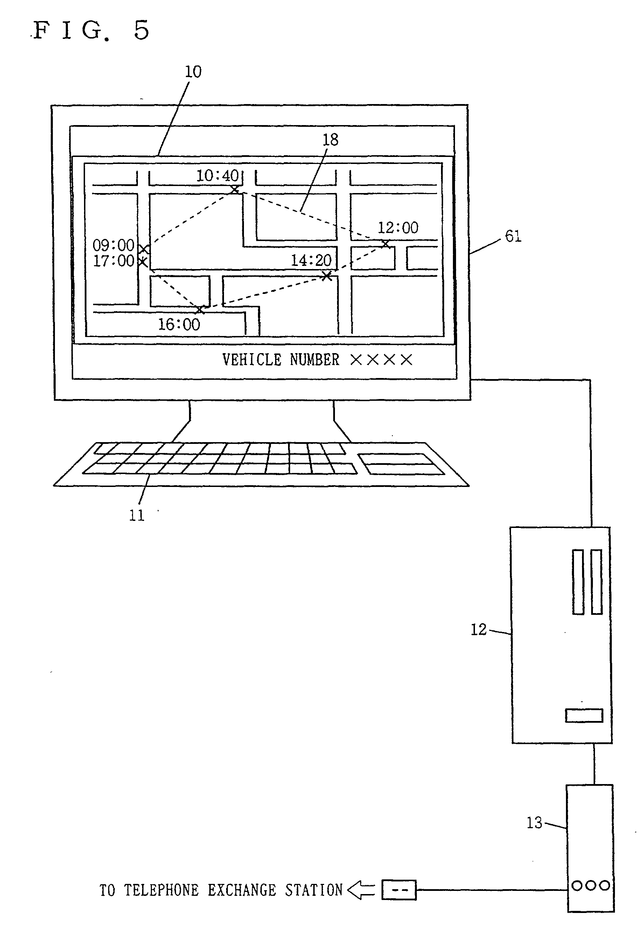

Fig. 5 exemplifies a portion of center station 9. Referring to Fig. 5, center station 9 includes a personal computer/work station 12, and a display 61 and a keyboard 11 connected to personal computer/work station 12. A center station modem 13 is connected to personal computer/work station 12. Personal computer/work station 12 is connected to the exchange station of a telephone central office via center modem 13. It is desirable that a plurality of telephone lines and modems are prepared in the control of a plurality of mobile terminals 1. The line is not limited to an analog telephone line, and the ISDN can be used.

A track 18 corresponding to the movement of mobile terminal 1 (mobile station) is indicated on electronic map 10 on the screen of display 61 together with a time stamp. 11 designates the keyboard. Although not shown, a mouse is used for operation.

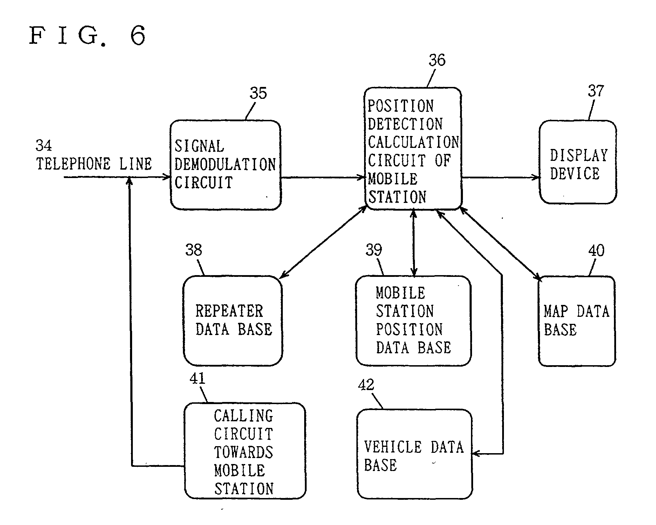

Fig. 6 shows an example of components of a system of the center station 9 end to calculate the position of mobile terminal 1 and to identify the obtained position on the map displayed on display 37. Referring to Fig. 6, 34 designates a telephone line, 35 a signal demodulation circuit, 36 a position detection calculation circuit of the mobile station, 37 a display device, 38 a data base of repeater 6, 39 a position data base of the mobile station, 40 a map data base, 41 a call circuit towards the mobile station, and 42 a data base of the vehicle.

It is to be noted that the position of mobile terminal 1 cannot be detected just by the data of the identification code and electric field intensity of each repeater sent from mobile terminal 1. In order to identify the position, repeater information such as the position of each repeater (address or latitude and longitude), the transmission power of each repeater, the height of the antenna and the like must be prepared in advance as a repeater data base 38 corresponding to the identification code of each of repeaters 2a, 2b, 2c, .... It is also necessary to prepare an electronic map data base 40 at the same time. Using the data of a plurality of repeaters sent from mobile terminal 1 under such an environment, the position of mobile terminal 1 can be identified by a method set forth in the following.

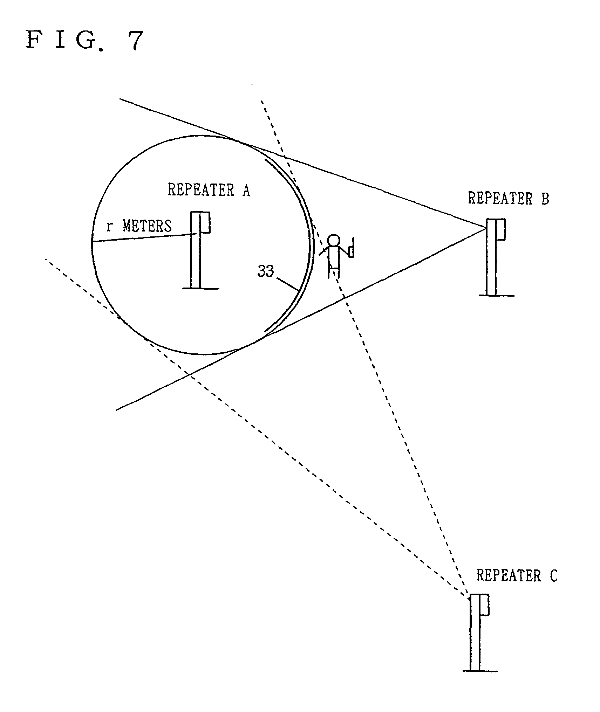

Taking advantage of the Friis transmission formula (refer to following equation (1)) indicating that the reception power is inversely proportional to the square of the distance of the antennas between a transmitter and a receiver, the distance between each of repeaters 2a, 2b, 2c, ... and mobile terminal 1 can be calculated from the level of the received power obtained by received electric field intensity measurement unit 23 of Fig. 4. Fig. 7 shows the basic principle thereof.

$$\text{Reception power} = \text{antenna gain of transmitter} \times \text{antenna gain of}$$

$$\text{receiver} \times \text{transmission power} \div (4\pi \times \text{distance between transmitter and}$$

$$\text{receiver/wavelength of wave})^2 \qquad (1).$$

Assuming that the distance between the transmitter and receiver obtained by reverse-calculation of the above equation (1) is r meters in Fig. 7, it is appreciated that mobile terminal 1 is located substantially on the circumference of a circle with a radius of approximately r meters about repeater A with the strongest electric field intensity. By drawing a tangent from repeater B and repeater C having the next strongest level of electric field intensity with respect to repeater A towards the circle with this radius of r meters to form an arc which is a portion of the circumference of the circle of r meters in radius, mobile terminal 1 will be located on this arc 33. As a result, the position of mobile terminal 1 can be identified at a higher level of accuracy. Position detection calculation circuit 36 of mobile terminal 1 includes the steps of calculating the distance r from repeater A of the greatest electric field intensity to mobile terminal 1, drawing a circle of radius r about repeater A, and drawing a tangent from the position of repeaters B, C, ..., having the second, third, ... greatest electric field intensity to the circle of radius r to form an arc 33, while displaying the mobile station on the map by referring to map data base 40 for the position information of a repeater. The data thereof is stored in data base 39 of mobile terminal 1.

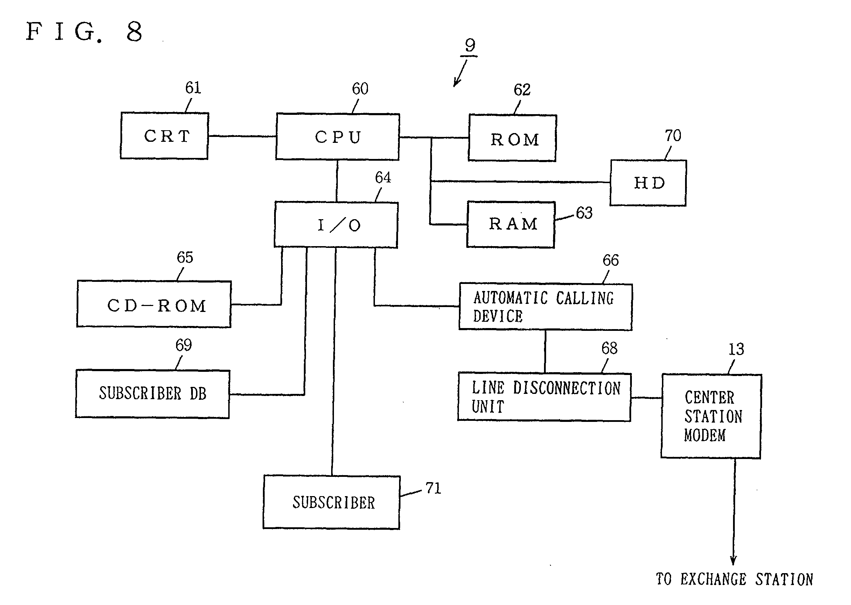

Fig. 8 is a block diagram showing a specific structure of center station 9. Referring to Fig. 8, center station 9 includes a CPU 60 providing the overall control of the system constituting center station 9, a CRT 61 connected to CPU 60 for displaying the position of mobile terminal 1 on a map, a ROM 62 and a RAM 63 for storing a program and the like defining the operation of center station 9, and an I/O interface 64 establishing an interface with an external device. To I/O interface 64 are connected a CD-ROM drive device 65 for displaying map data via I/O interface 64, a center station modem 13 for receiving theft information from mobile terminal 1, an automatic calling device 66 for calling and connecting with mobile terminal 1 via a PHS system exchange station, and a line disconnection unit 68 to issue a call by automatic calling device 66, as necessary, and immediately disconnecting the line after obtaining required information.

Information is transmitted to notify occurrence of theft to a predetermined subscriber of the system via I/O interface 64. Also, information that identifies the advancing position of mobile terminal 1 (address of location of mobile terminal 1, or said theft information itself) is transmitted together. The security organization involved in the search of the stolen vehicle or the owner of the stolen vehicle can be enumerated as examples of a predetermined subscriber. Center station 9 per se may be the security organization, or the home of the owner of the stolen vehicle. The telephone number and other subscriber information of the subscriber is stored in a subscriber data base (DB) 69.

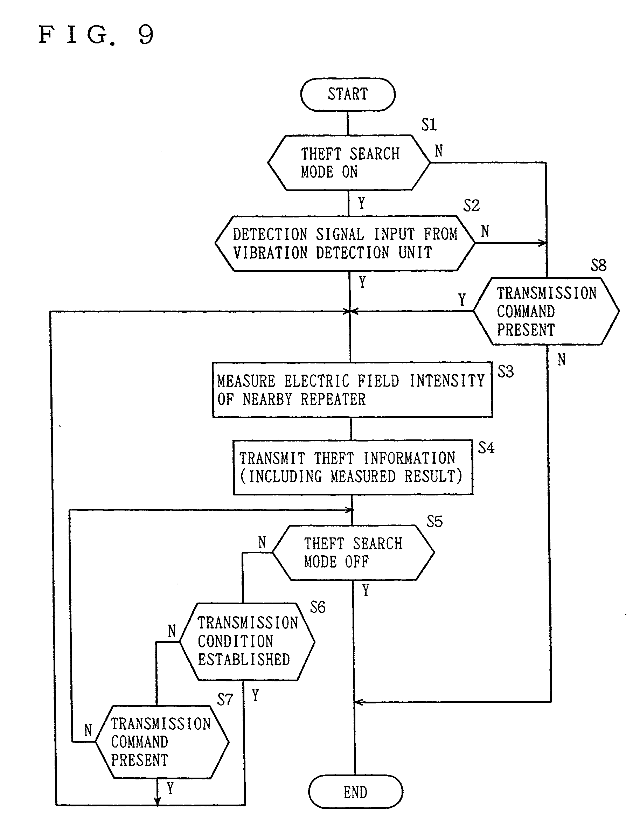

Fig. 9 is a flow chart showing the procedure of a theft information transmission process. Mobile communication device 100 incorporated in mobile terminal 1 executes the process described in the following according to the flow chart of Fig. 9. At step S (abbreviated as S hereinafter) 1, determination is made whether the theft search mode is ON or not. When the theft search mode is not set, control proceeds to S8 to determine whether there is a transmission command or not. This transmission command is the information sent from center station 9. The process ends in the absence of a transmission command. When there is a transmission command, control proceeds to S3 to carry out the process of measuring the electric field intensity of repeaters in the neighborhood. At S4, theft information including the measured result is sent to center station 9. Even if the theft search mode is not ON, the theft information is transmitted in response to a transmission command from center station 9. Therefore, center station 9 can obtained the position information, as necessary, even if the perpetrator of the stolen vehicle becomes aware of this system and cancels the theft search mode setting during escape. Center station 9 can obtain position information appropriately.

When the theft search mode is ON, control proceeds to S2 to determine whether a detection signal is input from vibration detection unit 27. Determination is made that mobile terminal 1 is not moving when a detection signal is not input. Therefore, control proceeds to S8. When a detection signal is input from vibration detection unit 27, determination is made that mobile terminal 1 is moving. Control proceeds to S3 where the electric field intensity of a wave arriving from peripheral repeaters 2a, 2b, 2c, ... is measured by received electric field intensity measurement unit 23 (refer to Fig. 4). The measured result is applied to control unit 24.

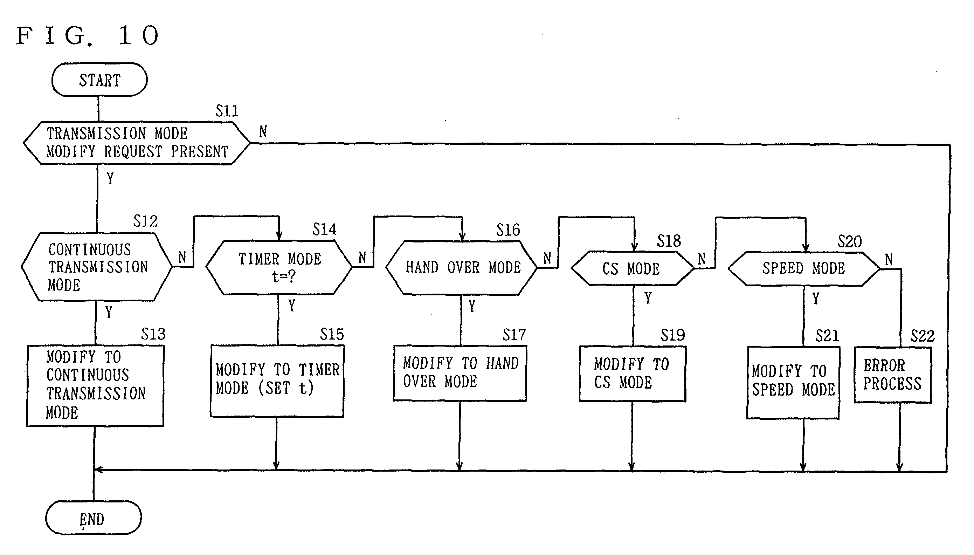

At S4, a call is emitted to center station 9 to execute the process of transmitting the theft information. This theft information includes the measured result of the electric field intensity of each repeater obtained at S3, and the information indicating the type of transmission mode that will be described afterwards. Then, control proceeds to S5 to determine whether the theft search mode is modified to OFF. The process ends when the theft search mode is turned off. When the theft search mode is not turned off, control proceeds to S6 to determine whether a transmission condition is established or not. This transmission condition corresponds to the condition of executing the process of measuring again the electric field intensity of each repeater to send the measured result as theft information to center station 9. This transmission condition depends upon the type of the transmission mode set at mobile communication device 100. As will be described afterwards with reference to Fig. 10, the transmission mode can be preselected from a plurality of types of transmission modes through remote control from center station 9 or by operation of mobile communication device 100. The transmission mode can be altered, if necessary, in tracking mobile terminal 1 corresponding to the stolen vehicle. When the transmission mode is set to a mode other than the continuous transmission mode that will be described afterwards, the call is immediately released after theft information is transmitted at S4. When the mode is set to the continuous transmission mode, the call is continuously maintained even after the theft information is transmitted.

When determination is made that the transmission condition is established at S6, control proceeds to S3. The electric field intensity of the repeaters in the neighborhood is measured again. At S4, the measured result is retransmitted to central station 9 as theft information. When the transmission condition is not established, control proceeds to S7 to determine whether there is a transmission command from central station 9. When a transmission command has been received, the process proceeds to S3 and S4 even if the transmission condition is not established. The latest measured result and the like are transmitted to center station 9 as the theft information. By confirming whether theft information is sent from mobile communication device 100 according to the transmission command at center station 9, determination can be made whether mobile communication device 100 is in a proper state or not. This is required because when the theft information continuously transmitted from mobile communication device 100 is interrupted from a certain time point, it cannot be determined whether this interruption is caused by the transmission condition not being satisfied, or caused by some other abnormal situation such as failure.

When determination is made that the transmission condition is not established at S6 and there is no transmission command at S7, control returns to S5. The determination steps of S5-S7 are repeatedly executed until any one of S5-S7 is YES.

Fig. 10 is a flow chart showing the procedure of a transmission mode modify process. Mobile communication device 100 modifies the transmission mode to determine the transmission timing of the theft information according to the procedure that will be described hereinafter.

At S11, determination is made whether there is a transmission mode modify request. When there is no transmission mode modify request, the process ends. Transmission mode modification is effected through operation of operation unit 28 provided at mobile communication device 100 or in response to a predetermined command signal from center station 9. When there is a transmission mode modify request, control proceeds to S12 to determine whether modification to a continuous transmission mode is to be effected or not. When there is a continuous transmission mode modification request, control proceeds to S13 to modify the mode to the continuous transmission mode.

A continuous transmission mode is the mode to maintain the connected call with center station 9 without release to sequentially transmit the latest measured result of the electric field intensity. In the continuous transmission mode, the electric field intensity of each repeater is measured by received electric field intensity measurement device 23 and subsequently sent to central station 9. The moving status of mobile terminal 1 can be monitored closely according to the continuous transmission mode.

When determination is made of NO at S12, control proceeds to S14 to determine whether there is a modification request to a timer mode. When there is a timer mode modification request, control proceeds to S15 to execute the process to switch to the timer mode.

A timer mode is a mode to transmit the theft information (including measured result of electric field intensity) according to a set transmission interval time t to center station 9. Transmission interval time t can be set arbitrary through operation unit 28 or by a command signal from center station 9. According to the timer mode, theft information can be sent from mobile communication device 100 according to the moving status (moving speed, moving distance and the like) of mobile station 1. For example, when mobile terminal 1 is moving at a high speed, the transmission interval time can be shortened. When the moving speed is slow, the time interval can be prolonged.

When determination is made of NO at S14, control proceeds to S16 to determine whether there is a modification request to a hand over mode. When there is a hand over mode modification request, control proceeds to S17 to switch to the hand over mode.

A hand over mode is a mode to transmit the theft information for every occurrence of hand over according to the travel of mobile terminal 1. Occurrence of hand over means that the electric field intensity of the repeater that is currently establishing a link has become lower than a predetermined threshold value due to the travel of mobile terminal 1. A link has been newly established with a repeater that has the highest electric field intensity at that time point. Therefore, by initiating control of connecting a call with center station 9 (control of issuing a telephone call) to transmit theft information at that instant, there is high possibility that theft information can be transmitted in a stable state. At the time point when the link is reestablished, the possibility of mobile terminal 1 being located at the approximate center of the radio zone of that repeater with the established link is high. This means that the distance from that site to the site where the next hand over occurs is great. The possibility of occurrence of hand over is low during transmission of the theft information. Thus, stable communication with the center station 9 can be secured even when mobile terminal 1 travels so fast that hand over occurs frequently with the possibility of the radio line control function between the repeaters not being followed.

When determination is made of NO at S16, control proceeds to S18 to determine whether there is a modification request to a CS mode. When there is a CS mode modification request, control proceeds to S19 to switch to the CS mode.

A CS mode is a mode to transmit the next theft information at a timing when the electric field intensity of another repeater becomes stronger than that of the current repeater with the highest electric field intensity. More specifically, in the measurement of the electric field intensity of each repeater in the neighborhood, the identification code of the repeater with the highest electric field intensity is stored. Measurement of the electric field intensity is repeatedly carried out thereafter. When the identification code of the repeater with the highest electric field intensity differs from the previously stored identification code, the measured result of that time point is transmitted as the theft information. Although depending upon the transmission status of the wave, it is assumed that mobile terminal 1 is present at the site closest to the repeater with the highest electric field intensity among the repeaters. According to the CS mode, center station 9 can obtain the theft information at the timing when the repeater closest to mobile terminal 1 changes. This means that the theft information can be obtained most effectively when the advancing position of mobile terminal 1 is to be detected roughly only according to the corresponding relationship with one repeater having the highest electric field intensity. Therefore, the communication cost can be reduced.

In the previous hand over mode, the theft information is not transmitted at the timing when the electric field intensity of another repeater becomes higher than that of the repeater with the greatest electric field intensity. This is because, once a link is established with a certain repeater, hand over does not occur unless the electric field intensity of the current repeater with the link becomes lower than a predetermined threshold value, even if the electric field intensity of another repeater becomes higher according to the travel of mobile terminal 1.

When determination is made of NO at S18, control proceeds to S20 to determine whether there is a modification request to a speed mode. When there is a speed mode modification request, control proceeds to S21 to switch the transmission mode to the speed mode.

A speed mode is the mode of transmitting theft information at a predetermined transmission time interval under the condition that the moving speed of mobile terminal 1 is lower than a predetermined speed.

According to the speed mode, a call is connected with center station 9 to transmit the theft information when mobile terminal 1 stops, for example, at the red signal of a crossing point. By setting appropriately the predetermined speed taking account of fading caused by the travel of mobile terminal 1, a measurement result minimized of the fading effect can be obtained. The wave fading effect according to the travel of mobile terminal 1 is particularly significant in the PHS that utilizes a high frequency among the mobile communication systems. There will be a great effect on the measured result of the electric field intensity. Particularly in the case where mobile terminal 1 is a vehicle that can move at high speed as in the present embodiment, the measured error depends greatly upon the timing of measuring the electric field intensity. By virtue of the speed mode, only the electric field intensity that is measured when mobile terminal 1 moves at a relatively slow speed or when in a complete halt state can be transmitted to center station 9. Therefore, the position of mobile terminal 1 can be identified at high accuracy from center station 9. The speed meter generally equipped in a vehicle can be utilized in measuring the speed of mobile terminal 1. Also, for the purpose of obtaining a measured result of low error, a mode utilizing a method set forth in the following can be added instead of the speed mode.

More specifically, the electric field intensity of each repeater is measured for a plurality of times at short intervals by received electric field intensity measurement unit 23 to calculate the arithmetic average. The measurement accuracy is calculated from the offset of each measured value. The arithmetic average calculated under the condition that the accuracy is within a predetermined range can be sent to center station 9 as the measured result.

When determination is made of NO at S20, control proceeds to S22 to execute the error process. Then, the process ends.

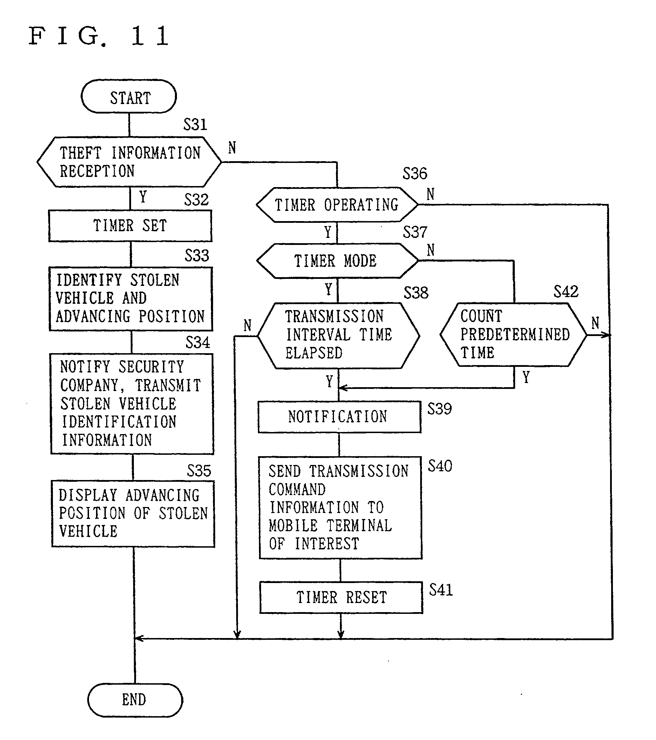

Fig. 11 is a flow chart of the procedure of a process executed by CPU 60 (refer to Fig. 8) of center station 9.

At S31, determination is made whether theft information is received or not. When theft information is received, control proceeds to S32 to set a predetermined timer. This timer is provided for the determination of S42 to identify whether the next theft information is transmitted or not from mobile terminal 1 that has transmitted the previous theft information at an elapse of a predetermined time.

At S33, a process is executed to identify the stolen vehicle and advancing position thereof according to the theft information transmitted from mobile terminal 1. A stolen vehicle is identified according to vehicle data base 42 of Fig. 6. The advancing position is identified by repeater data base 38 and map data base 40. At S34, the theft of the vehicle is notified to the security organization. The process of sending the stolen vehicle identification information to locate the stolen car to the security organization is carried out. Thus, theft of a vehicle is notified to the security organization. Then, control proceeds to S35 to execute the process of displaying the advancing position of the stolen vehicle on display 60 of display device 37. Then, the process ends.

When the theft information is not received at S31, control proceeds to S36 to determine whether the timer is operating or not. This timer is the timer set at S32. When the timer is not operating, it is appreciated that a case of theft of a vehicle has not occurred. In this case, the process ends. When the timer is operating, theft information is transmitted at least once, implying that a theft has been committed. In this case, control proceeds to S37 to determine whether the transmission mode of mobile communication device 100 incorporated at the stolen vehicle is in the timer mode or not. This transmission mode determination is carried out according to the theft information received at S31. When the transmission mode is in the timer mode, control proceeds to S38 to determine whether the transmission interval time set at the timer mode has already elapsed or not. The process ends when the transmission interval time has not yet elapsed. In contrast, when the transmission interval time has elapsed, it is appreciated that the communication has been interrupted by some abnormal situation despite of the fact that theft information has to be transmitted from mobile terminal 1. In this case, control proceeds to S39 to effect a predetermined notification. For example, track 18 of the mobile station is provided in a blinking manner on display 61 of Fig. 5. Then, control proceeds to S40 to transmit transmission command information to mobile terminal 1 that is exhibiting an abnormal situation. Mobile terminal 1 receiving this transmission command information immediately sends the theft information to center station 9 regardless of whether theft search mode is ON/OFF and what the situation is.

Then, control proceeds to S41 to reset the timer set at S32. The counting of the timer is initiated.

When determination is made that the transmission mode is not the timer mode at S37, control proceeds to S42 to determine whether the timer has counted the predetermined time set at S32 or S41. The process ends when the predetermined time has not yet elapsed.

When the predetermined time has elapsed, the process of S39, S40 and S41 is executed. As a result, notification is made that a predetermined time has elapsed from interruption of the theft information that was continuously sent from mobile communication device 100 from a certain time point. Transmission command information is sent to mobile communication device 100 that is interrupted of transmission. When there is no response from mobile communication device 100 with respect to this transmission command information, it is assumed that failure or some other abnormal situation has occurred in mobile communication device 100 or the vehicle incorporating the same. When theft information is transmitted in response to this transmission command information, the detail of the failure can be identified by analyzing the information. For example, the subsequent theft information will not be transmitted if mobile terminal 1 maintains a halt state when the transmission mode is set to the hand over mode. In this case, determination can be made whether mobile terminal 1 is maintaining a stoppage state or not by waiting for the theft information in response to the transmission command information.

Second Embodiment

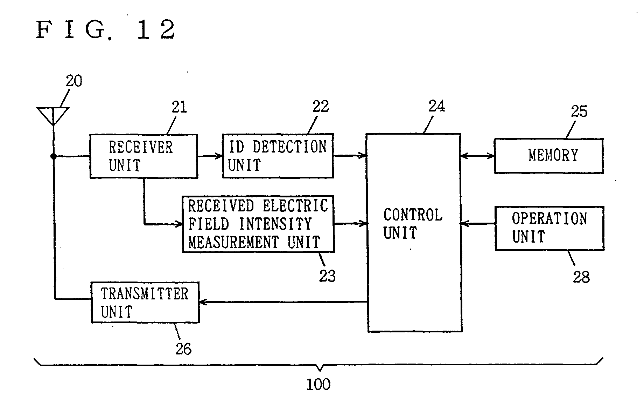

A second embodiment will be described with reference to Figs. 12-14. Fig. 12 is a block diagram showing a circuit structure of a mobile communication device 200 incorporated in mobile terminal 1 according to a second embodiment. Mobile communication device 200 of the second embodiment differs from mobile communication device 100 of Fig. 4 in that vibration detection unit 27 is not provided. Description of respective reference characters will not be repeated. Mobile communication device 200 is characterized from the standpoint of control in that movement of the vehicle is detected taking advantage of the electric field intensity of a wave transmitted from each of repeaters 2A, 2B, 2C, ... of Fig. 1.

More specifically, when operation unit 28 is operated to set the theft mode, control unit 24 compares the electric field intensity of each repeater measured by received electric field intensity measurement unit 23 to record the repeater receiving a wave at the highest electric field intensity. Then, the electric field intensity of each repeater is repeatedly measured at every predetermined period of time to compare the electric field intensity. When the repeater of the highest electric field intensity differs from the previously recorded repeater, determination is made that mobile terminal 1 has moved. Accordingly, the theft information is transmitted to center station 9.

The second embodiment is advantageous of reducing the system cost since the travel of mobile terminal 1 can be sensed taking advantage of received electric field intensity measurement unit 23 required for generation of theft information used in theft notification and position identification.

Here, travel of mobile terminal 1 is detected in response to change in the repeater with the highest electric field intensity. A structure can be implemented in which a repeater is recorded having the second, third, or another specific order of electric field intensity, and sensing travel of mobile terminal 1 by change in the order thereof. Also, by taking advantage of the occurrence of fading caused by travel of mobile terminal 1, variation of the electric field intensity greater than a predetermined width can be sensed to determine travel of mobile terminal 1.

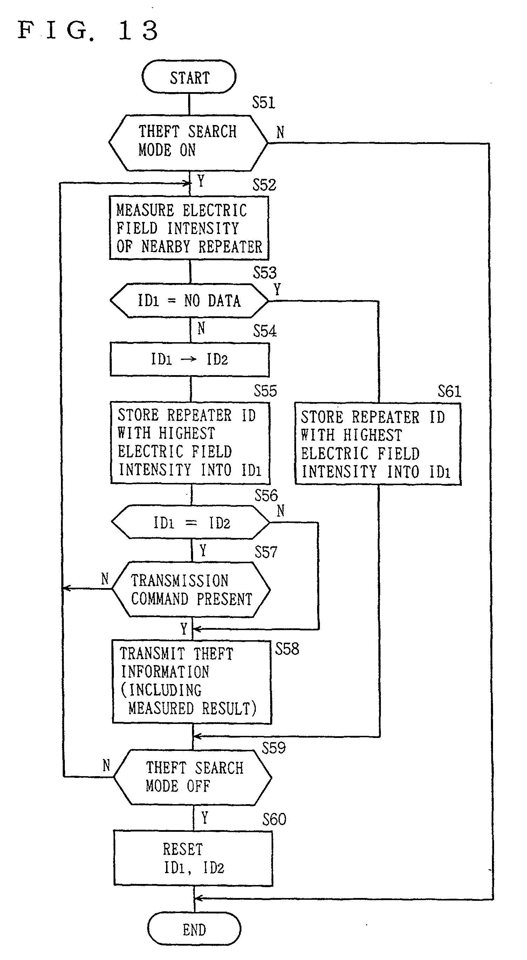

Fig. 13 is a flow chart showing the procedure of a theft information transmission process according to mobile terminal 200 of the second embodiment. At S51, determination is made whether the theft search mode is ON or not. The contents of this process are identical to the contents of S1 of Fig. 9. The process ends when the theft search mode is not turned ON. Control proceeds to S52 when the theft search mode is ON.

At S52, the process of measuring the electric field intensity of repeaters in the neighborhood is executed. Then, control proceeds to S53 to determine whether ID1 = NO DATA. ID1 and ID2 that will be described afterwards correspond to a portion of a region in memory 25 (refer to Fig. 12) identified by a predetermined address. When data is not stored in ID1, control proceeds to S61 to execute the process of recording the identification code (ID) of the repeater with the highest electric field intensity into ID 1 out of the electric field intensity measured at S52. Then, control proceeds to S59 to determine whether the theft search mode is turned off or not. When the theft search mode is still ON, control returns to S51. When the theft search mode is turned OFF, control proceeds to S60 to execute the process of erasing the data stored in ID1 and ID2. Then the process ends.

When a repeater ID is already stored in ID1 at S53, control proceeds to S54 to execute the process of storing the data recorded in ID1 1 into ID2. Then, control proceeds to S55 to execute the process of recording the repeater ID with the highest electric field intensity according to the measured result of S52 into ID1. As a result, the repeater ID with the highest electric field intensity is stored according to the latest measured result in ID 1 whereas the data according to the previous measured result is stored in ID2.

At S56, determination is made whether the data of ID1 1 matches the data of ID2. In other words, determination is made whether the repeater of the highest electric field intensity has changed between the previous time of measurement and the current time of measurement. When the repeater has not changed, control proceeds to S57 to determine whether transmission command information is sent from center station 9. When the transmission command information is not sent, control returns to S51.

When determination is made of YES at S57, control proceeds to S58 to execute the process of transmitting the theft information including the measured result of S52 to center station 9. By determination of NO at S56 and transmission of theft information at S58, occurrence of a theft is recognized at center station 9 to identify the stolen vehicle and position thereof.

Then, control proceeds to S59. If the theft search mode is not turned off, control proceeds to S52 to measure again the electric field intensity of the repeaters in the neighborhood. Then, each process of S53-S56 is executed. Under the condition that a measured result is obtained in which the repeater of the highest electric field intensity differs from the previously recorded repeater, the second theft information and et seq are transmitted at S58. Therefore, the transmission timing of the subsequent theft information is similar to that of the CS mode described with reference to Fig. 10. As described in the previous continuous transmission mode, a structure can be implemented in which the latest measured result is sequentially transmitted upon initiation of theft information transmission, instead.

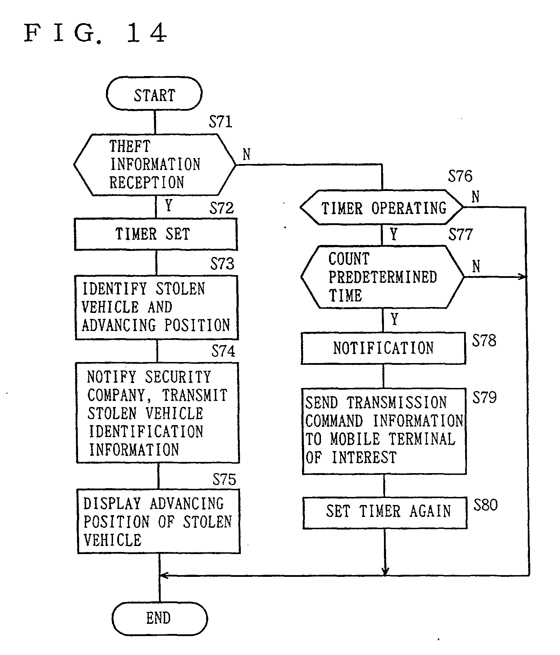

Fig. 14 is a flow chart showing the procedure of a process executed by CPU 60 of center station 9 according to the second embodiment.

At S71, determination is made whether theft information is received from mobile terminal 1. Here, S71-S75 of this flow chart are similar to S31-S35 of Fig. 11. S76-S80 are similar to S36, S39-S41, and S42 of Fig. 11. Therefore, further detailed description will not be provided.

Modification of the above-described embodiments will be enumerated hereinafter.

(1) The above embodiments were described in which a vehicle is exemplified as the mobile corresponding to mobile terminal 1. However, the mobile that moves together with the mobile communication device is not limited to a vehicle. For example, the concept of a mobile reads on a person that steals the PHS (portable handy phone) itself which is an example of the mobile communication device. Furthermore, mobile communication device 100/200 can have an extremely small design (for example, a thin card-like form) to be concealed in a bag or other belongings or formed integrally with a transportable item. A structure can be implemented to automatically transmit theft information from mobile communication device 100/200 to center station 9 in the event of being stolen. In this case, the portable item, the person escaping with the stolen item, or the vehicle used in the escape together with the stolen item read on the concept of a mobile. In other words, the term "mobile" in the present specification corresponds to the concept including an item that is moved incorporating the mobile communication device, and the person moving with the mobile communication device.

(2) The above embodiments employ the means of displaying on an electronic map as the system of identifying the advancing position of mobile terminal 1. Alternatively, or additionally, a structure can be implemented in which the mobile position of mobile terminal 1 is notified through voice. For example, in the case where the vehicle tracking the stolen car in the escape procedure is center station 9, it is convenient to have the direction and distance announced through voice in addition to the advancing position of mobile terminal 1 displayed on a screen.

(3) The above embodiments have the measured value of electric field intensity sent from mobile communication device 100/200 attached to mobile terminal 1. Alternatively, a structure can be implemented in which mobile communication device 100/200 calculates the position according to the electric field intensity and transmits the calculated result to center station 9. In other words, the predetermined position identification information transmitted from mobile communication device 100/200 is not limited to the measured value of electric field intensity itself. In the case of such a structure, repeater data base 38, mobile station position data base 39, map data base 40 and the like indicated as the facility of center station 9 should be mounted in mobile terminal 1.

(4) The method of identifying the advancing position of mobile terminal 1 on the basis of the electric field intensity of a plurality of repeaters was shown with reference to Fig. 7. However, the method of identifying the advancing position of mobile terminal 1 is not limited to this method. For example, a repeater with the highest electric field intensity can be identified according to the position relationship with mobile terminal 1 to provide the installed position of the repeater itself as the location of mobile terminal 1 on an electronic map in a display. Furthermore, the advancing position of mobile terminal 1 can be represented by displaying a predetermined graphical form (a graphical form such a circle, an ellipse, and the like corresponding to wave electric field intensity distribution of a relevant repeater) centered about the relevant repeater. In this case, the transmission mode is desirably set to the CS mode.

(5) The previous embodiments are described with the small zone type mobile communication system such as the PHS that has a small area covered by one repeater as the zone communication system. However, application of the present invention is not limited to the PHS. The present invention is applicable to a mobile communication system that covers a greater area than that of a repeater. The important feature is that mobile communication device 100/200 detects the occurrence of a theft to initiate communication and transmit position information at an arbitrary time. It is to be noted that the accuracy of the location is improved as the area covered by each repeater is smaller or as the repeaters are installed more closely to each other.

**Claims**

1. A location system using a zone communication system constituted by a plurality of radio zones (3a, 3b, 3c...) said location system comprising:

   a repeater (2a, 2b, 2c,...) provided in each of said plurality of radio zones,
   a mobile communication device (100, 200) for communicating while moving on a basis of a communication with the repeater,
   a communication station (9) for communicating with the mobile communication device, and
   motion sense means (23, 24) for sensing movement of a mobile that moves together with said mobile communication device,
   wherein said mobile communication device comprises

measurement means (23) that can measure electric field intensity of a wave arriving from a plurality of said repeaters, and
transmission means (20, 26) for or ansmitting predetermined position identification information according to a measured result of said measurement means to said communication station under a condition that movement of said mobile is sensed by said motion sense means when a predetermined movement inhibit condition is established,
wherein said communication station comprises

notification means (64) for notifying that said mobile is moving even though said movement inhibit condition is established according to received said position identification information, and
position identify means (36, 38, 40) for identifying an advancing position of a mobile that moves together with said mobile communication device according to said received position identification information, characterized in that said motion sense means senses (23, 24) movement of said mobile (1) that moves together with said mobile communication device (100, 200) by a change in an order of repeaters that are arranged in order according to the electric field intensity measured by said measurement means after said movement inhibit condition is established.

2. A mobile communication device for communicating while moving on a basis of a repeater (2a, 2b, 2c,...) provided in each of a plurality of radio zones (3a, 3b, 3c,...), said mobile communication device (100, 200) comprising:

motion sense means (27) for sensing movement of a mobile (1) that moves together with the mobile communication device (100, 200),
measurement means (23) that can measure electric field intensity of a wave arriving from a plurality of said repeaters, and
transmission means (20, 26) for transmitting to a communication station (9) that communicates with the mobile communication device (100, 200) position identification information that is based on a measured result of said measurement means and that allows identification of an advancing position of said mobile (1) that moves together with said mobile communication device under a condition that movement of said mobile is sensed by said motion sense means when a predetermined movement inhibit condition is established, characterized in that
said motion sense means senses (23, 24) movement of said mobile (1) that moves together with said mobile communication device (100, 200) by a change in an order of repeaters that are arranged in order according to the electric field intensity measured by said measurement means after said movement inhibit condition is established.

## Patentansprüche

1. Ortungssystem, das ein Zonenkommunikationssystem verwendet, das durch eine Mehrzahl von Funkzonen (3a, 3b, 3c, ...) gebildet ist, wobei das Ortungssystem aufweist:

einen Verstärker (2a, 2b, 2c, ...), der in jeder der Mehrzahl von Funkzonen vorgesehen ist,
eine Mobilkommunikationsvorrichtung (100, 200), zum Kommunizieren, während des Bewegens auf der Basis einer Kommunikation mit dem Verstärker,
eine Kommunikationsstation (9) zum Kommunizieren mit der Mobilkommunikationsvorrichtung, und
eine Bewegungserfassungseinrichtung (23, 24) zum Erfassen der Bewegung eines Mobils, das sich zusammen mit der Mobilkommunikationsvorrichtung bewegt, wobei die Mobilkommunikationsvorrichtung aufweist

eine Meßeinrichtung (23), die die Intensität des elektrischen Feldes einer Welle, die von einer Mehrzahl der Verstärker ankommt, messen kann, und
einer Übertragungseinrichtung (20, 26) zum Übertragen von vorbestimmter Positionsidentifizierungsinformation entsprechend einem Meßergebnis der Meßeinrichtung an die Kommunikationsstation unter einer Bedingung, daß die Bewegung des Mobils von der Bewegungserfassungseinrichtung erfaßt wird, wenn eine vorbestimmte Bewegungssperrbedingung hergestellt ist,
wobei die Kommunikationsstation aufweist

eine Meldeeinrichtung (64) zum Melden, daß sich das Mobil bewegt, obwohl die Bewegungssperrbedingung gegeben ist entsprechend der empfangenen Positionsidentifizierungsinformation, und

eine Positionsidentifizierungseinrichtung (36, 38, 40) zum Identifizieren einer sich voran bewegenden Position eines Mobils, das sich zusammen mit der Mobilkommunikationsvorrichtung bewegt entsprechend der empfangenen Positionsidentifizierungsinformation, dadurch gekennzeichnet, daß die Bewegungserfassungseinrichtung (23, 24) die Bewegung des Mobils (1), das sich zusammen mit der Mobilkommunikationsvorrichtung (100, 200) bewegt, erfaßt durch eine Änderung in einer Reihenfolge von Verstärkern, die in der Reihenfolge angeordnet sind entsprechend der Intensität des elektrischen Feldes, das durch die Meßeinrichtung gemessen wird, nachdem die Bewegungssperrbedingung hergestellt ist.

**2.** Mobilkommunikationsvorrichtung zum Kommunizieren während des Bewegens auf der Grundlage eines Verstärkers (2a, 2b, 2c, ...), der in jeder einer Mehrzahl von Funkzonen (3a, 3b, 3c, ...) vorgesehen ist, wobei die Mobilkommunikationsvorrichtung (100, 200) aufweist:

eine Bewegungserfassungseinrichtung (27) zum Erfassen der Bewegung eines Mobils (1), das sich zusammen mit der Mobilkommunikationsvorrichtung (100, 200) bewegt,
einer Meßeinrichtung (23), die die Intensität des elektrischen Feldes einer Welle, die von einer Mehrzahl der Verstärker ankommt, messen kann, und
einer Übertragungseinrichtung (20, 26) zum Übertragen an eine Kommunikationsstation (9), die mit der Mobilkommunikationsvorrichtung (100, 200) kommuniziert, Positionsidentifizierungsinformation, die auf einem Meßergebnis der Meßeinrichtung basiert, und die die Identifizierung einer sich voran bewegenden Position des Mobils (1), das sich zusammen mit der Mobilkommunikationsvorrichtung bewegt, erlaubt unter einer Bedingung, daß die Bewegung des Mobils durch die Bewegungserfassungseinrichtung erfaßt wird, wenn eine vorbestimmte Bewegungssperrbedingung hergestellt worden ist, dadurch gekennzeichnet, daß die Bewegungserfassungseinrichtung (23, 24) die Bewegung des Mobils (1), das sich zusammen mit der Mobilkommunikationsvorrichtung (100, 200) bewegt, erfaßt durch eine Änderung in einer Reihenfolge von Verstärkern, die in der Reihenfolge angeordnet sind entsprechend der Intensität des elektrischen Feldes, das durch die Meßeinrichtung gemessen wird nachdem die Bewegungssperrbedingung hergestellt ist.

## Revendications

**1.** Système de localisation utilisant un système de communication de zone constitué d'une pluralité de zones radio (3a, 3b, 3c...), ledit système de localisation comprenant :

un répéteur (2a, 2b, 2c...) disposé dans chaque zone de ladite pluralité des zones radio,
un dispositif de communication mobile (100', 200') pour communiquer tout en se déplaçant sur une base d'une communication avec le répéteur,
une station de communication (9) pour communiquer avec le dispositif de communication mobile, et
un moyen de détection de mouvement (23, 24) pour détecter le mouvement d'un mobile qui se déplace en même temps que ledit dispositif de communication mobile,
dans lequel ledit dispositif de communication mobile comprend :

un moyen de mesure (23) qui peut mesurer l'intensité du champ électrique d'une onde arrivant depuis une pluralité desdits répéteurs, et
un moyen de transmission (20, 26) pour transmettre des informations d'identification de position prédéterminée en conformité avec un résultat mesuré dudit moyen de mesure à ladite station de communication dans une condition où le déplacement dudit mobile est détecté par ledit moyen de détection de mouvement lorsqu'une condition d'interdiction de déplacement prédéterminée est établie,
dans lequel ladite station de communication comprend :

un moyen de notification (64) pour notifier que ledit mobile se déplace bien que la condition d'interdiction de déplacement soit établie en conformité avec lesdites informations d'identification de position reçue, et
un moyen d'identification de position (36, 38, 40) pour identifier une position d'avancement d'un mobile qui se déplace en même temps que ledit dispositif de communication mobile en conformité avec lesdites informations d'identification de position reçues, caractérisé en ce que ledit moyen de détection de mouvement détecte (23,24) le mouvement dudit mobile (1) qui se déplace en même temps que le dispositif de communication mobile (100, 200) par un changement dans l'ordre des répéteurs qui sont disposés dans un ordre en conformité avec l'intensité du champ électrique mesurée par ledit moyen de mesure après que ladite condition d'interdiction de déplacement soit établie.

2. Dispositif de communication mobile pour la communication tout en se déplaçant sur une base d'un répéteur (2a, 2b, 2c,...) disposé dans chaque zone d'une pluralité de zones radio (3a, 3b, 3c...), le dispositif de communication mobile (100, 200) comprenant :

un moyen de détection de mouvement (27) pour détecter le déplacement d'un mobile (1) qui se déplace en même temps que le dispositif de communication mobile (100, 200),

un moyen de mesure (23) qui peut mesurer l'intensité du champ électrique d'une onde arrivant depuis une pluralité desdits répéteurs, et

un moyen de transmission (20, 26) pour transmettre à une station de communication (3) qui communique avec le dispositif de communication mobile (100, 200) des informations d'identification de position qui sont basées sur un résultat mesuré dudit moyen de mesure et qui permet l'identification d'une position d'avancement dudit mobile (1) qui se déplace en même temps que ledit dispositif de communication mobile dans une condition où le déplacement dudit mobile est détecté par ledit moyen de détection de mouvement lorsqu'une condition d'interdiction de mouvement prédéterminé est établie, caractérisé en ce que

ledit moyen de détection de mouvement détecte (23, 24) le mouvement dudit mobile (1) qui se déplace en même temps que le dispositif de communication mobile (100, 200) par un changement dans l'ordre des répéteurs qui sont disposés dans un ordre en conformité avec l'intensité du champ électrique mesurée par ledit moyen de mesure après que ladite condition d'interdiction de déplacement soit établie.

F I G. 1

# FIG. 2

|  | (CS-ID) | | | (PS-ID) |
| --- | --- | --- | --- | --- |
|  | TRANSMITTER IDENTIFICATION CODE 42BIT | | | RECEIVER IDENTIFICATION CODE 28BIT |

| TELEPHONE COMPANY IDENTIFICATION CODE 9 BIT | OUTDOOR PUBLIC ADDITIONAL ID 33 BIT | | PS CALL CODE 28 BIT |
| --- | --- | --- | --- |
| | SIMULTANEOUS CALLING AREA NUMBER n BIT | ADDITIONAL ID 33-n BIT | |

# FIG. 3

|  | (CS-ID) | | (PS-ID) |
| --- | --- | --- | --- |
|  | TRANSMITTER IDENTIFICATION CODE 42BIT | | RECEIVER IDENTIFICATION CODE 28BIT |

| SYSTEM CALL CODE 29BIT | ADDITIONAL ID 13BIT | PS CALL CODE 28BIT |
| --- | --- | --- |

# FIG. 4

FIG. 5

VEHICLE NUMBER ✕✕✕✕

TO TELEPHONE EXCHANGE STATION

FIG. 6

34
TELEPHONE LINE

35
SIGNAL DEMODULATION CIRCUIT

36
POSITION DETECTION CALCULATION CIRCUIT OF MOBILE STATION

37
DISPLAY DEVICE

38
REPEATER DATA BASE

39
MOBILE STATION POSITION DATA BASE

40
MAP DATA BASE

41
CALLING CIRCUIT TOWARDS MOBILE STATION

42
VEHICLE DATA BASE

F I G. 7

REPEATER A

r METERS

REPEATER B

33

REPEATER C

FIG. 8

EP 1 018 457 B1

# F I G. 9

```
                    ┌─────────┐
                    │  START  │
                    └─────────┘
                         │                    S1
                    ┌────────────┐    N
                   ╱ THEFT SEARCH ╲─────────────────┐
                   ╲  MODE ON      ╱                 │
                    └────────────┘                   │
                         │ Y              S2         │
                 ┌──────────────────────┐  N         │
                ╱ DETECTION SIGNAL INPUT FROM ╲──────▶│
                ╲ VIBRATION DETECTION UNIT    ╱       │
                 └──────────────────────┘            │
                         │ Y                          │      S8
                         │            Y    ┌──────────────┐
            ┌────────────┼─────────────────╱ TRANSMISSION ╲
            │            │                 ╲ COMMAND       ╱
            │            │                  ╲ PRESENT     ╱
            │            │                   └──────────┘
            │            │                        │ N
            │    ┌────────────────────────────┐ S3
            │    │ MEASURE ELECTRIC FIELD INTENSITY │
            │    │ OF NEARBY REPEATER          │
            │    └────────────────────────────┘
            │            │
            │    ┌────────────────────────────┐ S4
            │    │ TRANSMIT THEFT INFORMATION  │
            │    │ (INCLUDING MEASURED RESULT) │
            │    └────────────────────────────┘
            │            │
            │      N  ┌──────────────┐ S5
            │   ┌─────╱ THEFT SEARCH  ╲
            │   │     ╲  MODE OFF      ╱
            │   │      └──────────────┘
            │   │            │ Y
            │ N ┌──────────────┐ S6
            │ ┌─╱ TRANSMISSION  ╲
            │ │ ╲ CONDITION      ╱
            │ │  ╲ ESTABLISHED  ╱
            │ │   └──────────┘
            │ │        │ Y
            │ │ N ┌──────────────┐ S7
            └─┼───╱ TRANSMISSION  ╲
              │   ╲ COMMAND        ╱
              │    ╲ PRESENT      ╱
              │     └──────────┘
              │          │ Y
              └──────────┘
                    ┌─────────┐
                    │   END   │
                    └─────────┘
```

# FIG. 10

START

S11 TRANSMISSION MODE MODIFY REQUEST PRESENT — N

Y

S12 CONTINUOUS TRANSMISSION MODE — N

Y

S13 MODIFY TO CONTINUOUS TRANSMISSION MODE

S14 TIMER MODE t=? — N

Y

S15 MODIFY TO TIMER MODE (SET t)

S16 HAND OVER MODE — N

Y

S17 MODIFY TO HAND OVER MODE

S18 CS MODE — N

Y

S19 MODIFY TO CS MODE

S20 SPEED MODE — N

Y

S21 MODIFY TO SPEED MODE

S22 ERROR PROCESS

END

EP 1 018 457 B1

# FIG. 11

```
                        START

                   ┌──────────────────┐  S31
                   │ THEFT INFORMATION │ ──N──┐
                   │ RECEPTION         │      │
                   └──────────────────┘      │
                          │ Y   S32           │         ┌────────────────┐ S36
                   ┌──────────────┐           └────────▶│ TIMER OPERATING│──N──┐
                   │  TIMER SET   │                     └────────────────┘     │
                   └──────────────┘                            │ Y   S37        │
                          │     S33                      ┌────────────┐  N      │
                   ┌──────────────────┐                  │ TIMER MODE │─────┐   │
                   │ IDENTIFY STOLEN  │                  └────────────┘     │   │
                   │ VEHICLE AND      │                         │ Y  S38     │   │
                   │ ADVANCING POSITION│        ┌──────────────────────┐  S42 │   │
                   └──────────────────┘      N  │ TRANSMISSION │  ┌──────────────────┐ │   │
                          │     S34        ┌────│ INTERVAL TIME│  │ COUNT            │─N─┤
                   ┌──────────────────┐    │    │ ELAPSED      │  │ PREDETERMINED    │  │
                   │ NOTIFY SECURITY  │    │    └──────────────┘  │ TIME             │  │
                   │ COMPANY, TRANSMIT│    │           │ Y        └──────────────────┘  │
                   │ STOLEN VEHICLE   │    │           │◀─────────────────┘ Y           │
                   │ IDENTIFICATION   │    │    ┌──────────────┐ S39                    │
                   │ INFORMATION      │    │    │ NOTIFICATION │                        │
                   └──────────────────┘    │    └──────────────┘                        │
                          │     S35        │           │                                │
                   ┌──────────────────┐    │    ┌──────────────────┐ S40               │
                   │ DISPLAY ADVANCING│    │    │ SEND TRANSMISSION│                    │
                   │ POSITION OF STOLEN│   │    │ COMMAND          │                    │
                   │ VEHICLE          │    │    │ INFORMATION TO   │                    │
                   └──────────────────┘    │    │ MOBILE TERMINAL  │                    │
                          │                │    │ OF INTEREST      │                    │
                          │                │    └──────────────────┘                    │
                          │                │    ┌──────────────┐ S41                    │
                          │                │    │ TIMER RESET  │                        │
                          │                │    └──────────────┘                        │
                          │                │           │                                │
                          │◀───────────────┴───────────┴────────────────────────────────┘
                          │
                        END
```

FIG. 12

# F I G. 1 3

```
                    ┌─────────┐
                    │  START  │
                    └────┬────┘
                         │                  S51
                  ╱──────┴──────╲       N
                 ╱ THEFT SEARCH  ╲──────────────────┐
                 ╲  MODE ON      ╱                   │
                  ╲──────┬──────╱                    │
                         │ Y              S52         │
    ┌───────────────────►│                           │
    │           ┌────────┴─────────┐                 │
    │           │ MEASURE ELECTRIC │                 │
    │           │ FIELD INTENSITY  │                 │
    │           │ OF NEARBY REPEATER│                │
    │           └────────┬─────────┘                 │
    │                    │             S53            │
    │             ╱──────┴──────╲    Y                │
    │            ╱ ID1 = NO DATA ╲───────────┐        │
    │            ╲               ╱           │        │
    │             ╲──────┬──────╱            │        │
    │                    │ N      S54        │        │
    │           ┌────────┴─────────┐         │        │
    │           │   ID1 → ID2      │         │        │
    │           └────────┬─────────┘         │        │
    │                    │   S55             │   S61  │
    │        ┌───────────┴──────┐  ┌─────────┴──────┐ │
    │        │ STORE REPEATER ID│  │STORE REPEATER ID│ │
    │        │ WITH HIGHEST     │  │WITH HIGHEST     │ │
    │        │ ELECTRIC FIELD   │  │ELECTRIC FIELD   │ │
    │        │ INTENSITY INTO ID1│ │INTENSITY INTO ID1│ │
    │        └───────────┬──────┘  └─────────┬──────┘ │
    │                    │    S56            │        │
    │             ╱──────┴──────╲   N         │        │
    │            ╱  ID1 = ID2    ╲──────┐     │        │
    │            ╲               ╱      │     │        │
    │             ╲──────┬──────╱       │     │        │
    │                    │ Y    S57     │     │        │
    │    N  ╱────────────┴──────╲       │     │        │
    │◄─────╱ TRANSMISSION        ╲      │     │        │
    │      ╲ COMMAND PRESENT     ╱      │     │        │
    │       ╲──────┬────────────╱       │     │        │
    │              │ Y ◄───────────────┘     │        │
    │       ┌──────┴──────────┐   S58         │        │
    │       │ TRANSMIT THEFT  │               │        │
    │       │ INFORMATION     │               │        │
    │       │ (INCLUDING      │               │        │
    │       │ MEASURED RESULT)│               │        │
    │       └──────┬──────────┘               │        │
    │              │◄─────────────────────────┘        │
    │              │             S59                    │
    │ N     ╱──────┴──────╲                             │
    └──────╱ THEFT SEARCH  ╲                            │
           ╲  MODE OFF     ╱                            │
            ╲──────┬──────╱                             │
                   │ Y      S60                         │
           ┌───────┴───────┐                            │
           │    RESET      │                            │
           │   ID1, ID2    │                            │
           └───────┬───────┘                            │
                   │◄───────────────────────────────────┘
              ┌────┴────┐
              │   END   │
              └─────────┘
```

FIG. 14

```
                    ┌──────────────┐
                    │    START     │
                    └──────┬───────┘
                           │        S71
                    ╱──────┴──────╲
                   ╱   THEFT       ╲        N
                  ╱  INFORMATION    ╲─────────────────────┐
                  ╲   RECEPTION     ╱                      │
                   ╲───────┬───────╱                       │
                     Y     │  S72                          │
              ┌────────────┴────────────┐         ╱────────┴──────╲   S76
              │       TIMER SET         │        ╱ TIMER OPERATING  ╲    N
              └────────────┬────────────┘        ╲                  ╱────┐
                           │  S73                  ╲────────┬──────╱     │
              ┌────────────┴────────────┐             Y     │  S77       │
              │ IDENTIFY STOLEN         │        ╱──────────┴────────╲   │
              │ VEHICLE AND             │       ╱     COUNT           ╲  N
              │ ADVANCING POSITION      │       ╲  PREDETERMINED      ╱──┤
              └────────────┬────────────┘        ╲    TIME          ╱    │
                           │  S74                  ╲───────┬───────╱     │
              ┌────────────┴────────────┐              Y   │            │
              │ NOTIFY SECURITY         │        ┌─────────┴────────┐   │
              │ COMPANY, TRANSMIT       │        │  NOTIFICATION    │S78│
              │ STOLEN VEHICLE          │        └─────────┬────────┘   │
              │ IDENTIFICATION          │                  │            │
              │ INFORMATION             │        ┌─────────┴────────┐   │
              └────────────┬────────────┘        │ SEND TRANSMISSION│S79│
                           │  S75                 │ COMMAND INFORMATION│ │
              ┌────────────┴────────────┐        │ TO MOBILE TERMINAL│  │
              │ DISPLAY ADVANCING       │        │ OF INTEREST      │   │
              │ POSITION OF STOLEN      │        └─────────┬────────┘   │
              │ VEHICLE                 │                  │            │
              └────────────┬────────────┘        ┌─────────┴────────┐  │
                           │                     │ SET TIMER AGAIN  │S80│
                           │                     └─────────┬────────┘  │
                           │                               │           │
                           └──────────────┬────────────────┴───────────┘
                                   ┌───────┴───────┐
                                   │     END       │
                                   └───────────────┘
```

26